(19) Europäisches Patentamt
European Patent Office
Office européen des brevets

(11) EP 1 871 832 B1

(12) **EUROPEAN PATENT SPECIFICATION**

(45) Date of publication and mention of the grant of the patent:
**13.06.2012 Bulletin 2012/24**

(21) Application number: **06725302.1**

(22) Date of filing: **24.03.2006**

(51) Int Cl.:
***C08L 23/10** (2006.01)* ***B32B 27/32** (2006.01)*

(86) International application number:
**PCT/EP2006/061032**

(87) International publication number:
**WO 2006/111448 (26.10.2006 Gazette 2006/43)**

(54) **BIAXIALLY ORIENTED PROPYLENE POLYMER FILMS**

BIAXIAL ORIENTIERTE PROPYLENPOLYMERFOLIEN

FILMS DE POLYMERES DU PROPYLENE ORIENTES BIAXIALEMENT

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.04.2005 EP 05103209**
**05.05.2005 US 677914 P**

(43) Date of publication of application:
**02.01.2008 Bulletin 2008/01**

(73) Proprietor: **Basell Poliolefine Italia S.r.l.**
**20127 Milano (IT)**

(72) Inventors:
- **GOELDEL, Andreas**
  **95346 Stadtsteinach (DE)**
- **MEESTERS, Els**
  **B-3722 Kortessem - Wintershoven (BE)**

(74) Representative: **Sacco, Marco**
**Basell Poliolefine Italia S.r.l.**
**Intellectual Property**
**P.le Donegani, 12**
**44122 Ferrara (IT)**

(56) References cited:
**EP-A- 1 219 506** **US-A1- 2004 161 561**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 871 832 B1

## Description

The invention relates to biaxially oriented propylene polymer films.

Polyethylene, in particular LLDPE, is the most dominant material used in the support layer of multilayer shrinkable films. However, it is also known that support layers of BOPP films can be produced from heterophasic propylene polymer compositions.

Multilayer heat-shrinkable films can be for example produced according to the International Patent Application WO 01/70500, wherein the support layer of the multilayer films consists of a heterophasic composition comprising 20-60 wt% of propylene homopolymer or propylene/ethylene copolymer and 40-80 wt% of an ethylene/alpha-olefin or ethylene/propylene copolymer containing 20-60 wt% of ethylene units.

BOPP films permeable to gases are described for example in the International Patent Application WO 02/057342. Said BOPP films comprise at least one layer of a propylene polymer or propylene polymer composition containing at least 0,8 wt% of ethylene, having melting temperature higher than 155°C, a xylene soluble fraction at room temperature of less than 3 wt% and a value of the ratio of the polymer fraction collected in the temperature range from 25°C to 95°C to the fraction soluble in xylene at room temperature higher than 8 wt%/wt%.

US 2004/151561 relates to a peelable film comprising a propylene/alpha olefin copolymer and a propylene/alpha olefin copolymer and/or a propylene homopolymer. It is silent about multilayer films having at least three layers.

EP 1219 506 relates to airbag housing cover comprising a propylene homopolymer and a propylene copolymer. It is silent about multilayer films having at least three layers

The properties of the films obtainable from the above-mentioned propylene polymers render them suitable for a broad range of film applications, however a need still exists for films with a balance of properties that can span the range of applications. It is therefore an object of the present invention to provided biaxially oriented propylene polymer films that can be used in a variety of different applications, which possess a good balance of physical mechanical properties and excellent transparency.

It has unexpectedly been found that the biaxially oriented propylene polymer films of the invention satisfy these required needs.

The present invention provides a multilayer biaxially oriented propylene polymer film (BOPP film), comprising at least three layers characterized in that the support layer of said multilayer film comprises:

(A) 15 to 75 wt% of a propylene homopolymer and

(B) 25 to 85 wt% of a propylene copolymer composition comprising (percent of (a) and (b) based on the component (B)):

(a) 50 to 85 wt% of a propylene copolymer containing from 0.05 to 1.5 wt% of alpha-olefin units having from 2 to 10 carbon atoms other than propylene; and

(b) 15 to 50 wt% of a propylene copolymer containing less than 20 wt% of alpha-olefin units having from 2 to 10 carbon atoms other than propylene.

By multilayer film is meant herein a film comprising at least three layers, a support layer and at least two outer layers, wherein the outer layers adhere to the surface of the said support layer.

The support layer of the biaxially oriented propylene polymer films of the invention preferably comprises 35 to 75 wt%, more preferably 40-70 wt%, of component (A) and 25 to 65 wt%, more preferably 30-60 wt%, of component (B).

The component (A) of the support layer is a propylene homopolymer preferably having the following set of properties:

- MFR of less than 10 g/10 min, most preferably less than 4 g/10 min, (230°C, 2.26 Kg/ISO 1133); and/or
- xylene soluble fraction at 25°C of less than 6 wt.%; and/or
- Vicat softening temperature higher than 150°C (ISO 306); and/or
- tensile modulus from 1200 to 1600 MPa (1 mm/min, ISO 527-1,2); and/or
- tensile strain at break higher than 300% (50 mm/min, ISO 527-1,2).

The propylene homopolymer (A) can be prepared by a polymerization reaction in one ore more polymerization steps. Preferably, each polymerization step is carried out in presence of a highly stereospecific heterogeneous Ziegler-Natta. Said catalysts comprise a solid catalyst component comprising at least one titanium compound having at least one titanium-halogen bond and at least an electron-donor compound (internal donor), both supported on magnesium chloride. The Ziegler-Natta catalysts systems further comprise an organo-aluminum compound as essential co-catalyst and optionally an external electron-donor compound.

Suitable catalyst systems are described in the European patents EP45977, EP361494, EP728769, EP1272533

and in the international patent application WO00/63261.

Preferably, the solid catalyst component comprises Mg, Ti, halogen and an electron donor selected from mono- and diesters of aromatic dicarboxylic acids having the -COOH groups into ortho position, wherein at least one of the R hydrocarbyl radical of the -COOR groups contains from 3 to 20 carbon atoms. Preferably the electron donor is selected from diisobutyl-2,3-naphthalen-dicarboxylate, di-n-propyl, di-n-butyl, diisobutyl, di-n-heptyl, di-2-ethylhexyl, di-n-octyl, di-neopentil phthalates, monobutyl and monoisobutyl esters of phthalic acid, ethyl-isobutylphthalate, ethyl-n-butyl-phthalate as described in European patents EP45977 and EP728769.

According to a preferred method, the solid catalyst component can be prepared by reacting a titanium compound of formula $Ti(OR)_{n-y}X_y$, where n is the valence of titanium and y is a number between 1 and n, preferably $TiCl_4$, with a magnesium chloride deriving from an adduct of formula $MgCl_2 \cdot pROH$, where p is a number between 0.1 and 6, preferably from 2 to 3.5, and R is a hydrocarbon radical having 1-18 carbon atoms. The adduct can be suitably prepared in spherical form according to US 4,399,054 and US 4,469,648. The so obtained adduct can be directly reacted with the Ti compound or it can be previously subjected to thermal controlled dealcoholation (80-130 °C) so as to obtain an adduct in which the number of moles of alcohol is generally lower than 3, preferably between 0.1 and 2.5. The reaction with the Ti compound can be carried out by suspending the adduct (dealcoholated or as such) in cold $TiCl_4$ (generally 0 °C); the mixture is heated up to 80-130 °C and kept at this temperature for 0.5-2 hours. The treatment with $TiCl_4$ can be carried out one or more times. The internal donor can be added during the treatment with $TiCl_4$ and the treatment with the electron donor compound can be repeated one or more times. Generally, the internal donor is used in molar ratio with respect to the $MgCl_2$ of from 0.01 to 1 preferably from 0.05 to 0.5. The preparation of catalyst components in spherical form is described for example in European patent application EP-A-395083 and in the International patent application WO98/44009.

The organo-aluminum compound is preferably an alkyl-A1 selected from the trialkyl aluminum compounds such as for example triethylaluminum, triisobutylaluminum, tri-n-butylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as $AlEt_2Cl$ and $Al_2Et_3Cl_3$.

Preferred external electron-donor compounds include silicon compounds, ethers, esters such as ethyl 4-ethoxybenzoate, amines, heterocyclic compounds and particularly 2,2,6,6-tetramethyl piperidine, ketones and the 1,3-diethers. Another class of preferred external donor compounds is that of silicon compounds of formula $R_a^5R_b^6Si(OR^7)_c$, where a and b are integer from 0 to 2, c is an integer from 1 to 3 and the sum (a+b+c) is 4; $R^5$, $R^6$, and $R^7$, are alkyl, cycloalkyl or aryl radicals with 1-18 carbon atoms optionally containing heteroatoms. Particularly preferred are methylcyclohexyldimethoxysilane, diphenyldimethoxysilane, methyl-t-butyldimethoxysilane, dicyclopentyldimethoxysilane, 2-ethylpiperidinyl-2-t-butyldimethoxysilane and 1,1,1,trifluoropropyl-2-ethylpiperidinyl-dimethoxysilane and 1,1,1,triftuoropropylmetildimethoxysilane. The external electron donor compound is used in such an amount to give a molar ratio between the organo-aluminum compound and said electron donor compound of from 0.1 to 500.

The polymerization process can be carried out in gas phase and/or in liquid phase, in continuous or batch reactors, such as fluidized bed or slurry reactors, or alternatively the gas-phase polymerization process can carried out in at least two interconnected polymerization zones, as described in the European patent EP782587. The reaction time, temperature and pressure of the polymerization steps are not critical per se, however the temperature for the preparation of the propylene homopolymer (A) is usually from 50°C to 120°C. The polymerization pressure preferably ranges from 0.5 to 12 MPa if the polymerization is carried out in gas-phase. The catalytic system can be pre-contacted (pre-polymerized) with small amounts of olefins. The molecular weight of the propylene polymer composition is regulated by using known regulators, such as hydrogen.

The component (B) of the support layer is a propylene polymer composition comprising (percent of (a) and (b) based on the component (B)):

(a) 50 to 85 wt% of a propylene copolymer containing from 0.05 to 1.5 wt%, preferably from 1.01 to 1.3 wt%, of alpha-olefin units having from 2 to 10 carbon atoms other than propylene; and
(b) 15 to 50 wt% of a propylene copolymer containing less than 20 wt%, preferably from 5 to 15 wt%, more preferably from 8.5 to 11.5 wt% of alpha-olefin units having from 2 to 10 carbon atoms other than propylene.

Said propylene copolymer composition (B) preferably has the following set of properties:

(i) MFR (230°C/2.16 Kg/ISO 1133) comprised between 1 and 12 g/10min, preferably between 8 and 12 g/10min; and/or
(ii) Tensile E modulus comprised between 400 and 800 MPa, preferably between 550 and 750 MPa, in particular in the range from 600 MPa to 700 MPa (ISO 527-2:1993); and/or
(iii) Melting point comprised between 143°C and 150°C; more preferably comprised between 145°C and 150°C (measured according to ISO 3146); and/or
(iv) Xylene soluble fraction comprised between 15 and 25% by weight, more preferably between 17 and 20% by

weight.

Furthermore, the propylene copolymer composition preferably has haze value, measured according to ASTM D 1003, comprised between 25% and 40%; preferably between 25% and 35%; more preferably between 31% and 35%, wherein the haze value is measured on the product as such without adding clarifying agents.

To prepare the propylene copolymer compositions (B) an alpha-olefin is used as comonomer in addition to propylene. Preferred alpha-olefins are linear $C_2$-$C_{10}$-1-alkenes. Particularly preferred are ethylene and linear $C_4$-$C_{10}$-1-alkenes such as 1-butene, 1-pentene, 1-hexene, 1-heptene, 1-octene, 1-decene, in particular ethylene or 1-butene. In a further, preferred embodiment, monomers containing at least two double bonds, e.g. 1,7-octadiene or 1,9-decadiene, are additionally used.

The propylene copolymer composition (B) comprises from 50 to 85 wt% of the copolymer (a); preferably from 60 to 75 wt%; more preferably from 65 to 72 wt%. Said composition contains from 15 to 50 wt% of the propylene copolymer (b); preferably from 25 to 40 wt%; more preferably from 28 to 35 wt%.

The proportion of n-hexane-soluble material in the propylene copolymer compositions (B) is preferably less than or equal to 2.6 wt%, particularly preferably less than or equal to 2.0 wt%. The propylene copolymer composition (B) preferably has a narrow molecular weight distribution Mw/Mn. The molecular weight distribution Mw/Mn is preferably in the range from 1.5 to 3.5, particularly preferably in the range from 2 to 2.5 and in particular in the range from 2 to 2.4. The molecular weight Mn of the propylene copolymer compositions (B) is preferably in the range from 20,000 g/mol to 500,000 g/mol, particularly preferably in the range from 50,000 g/mol to 200,000 g/mol and very particularly preferably in the range from 80,000 g/mol to 150,000 g/mol.

The propylene polymer compositions (B) can be prepared by sequential polymerization in at least two stages, with each subsequent polymerization stage being conducted in the presence of the polymeric material formed in the immediately preceding polymerization reaction, wherein the copolymer (a) is normally prepared in at least one first polymerization stage and the copolymer (b) is normally prepared in at least one second polymerization stage. The polymerization can be carried out in a known manner in bulk, in suspension, in the gas phase or in a supercritical medium. It can be carried out batchwise or preferably continuously. Solution processes, suspension processes, stirred gas-phase processes or gas-phase fluidized-bed processes are possible. As solvents or suspension media, it is possible to use inert hydrocarbons, for example isobutane, or else the monomers themselves. For example, it is possible to carry out the polymerization of the propylene copolymer (a) in liquid phase, using liquid propylene as diluent, while the copolymerization stage to obtain the propylene copolymer (b) is carried out in gas phase, without intermediate stages except for the partial degassing of the monomers. Alternatively, all the sequential polymerization stages can be carried out in gas phase. The reaction time, temperature and pressure of the polymerization steps are not critical, however the temperature for the preparation of fraction (a) and (b), that can be the same or different, is usually from 40°C to 120°C, preferably at from 60 to 80°C, particularly preferably from 65 to 75°C. The polymerization pressure preferably ranges from 0.5 to 20 MPa, preferably from 0.5 to 10 MPa, particularly preferably from 1 to 5 MPa if the polymerization is carried out in gas-phase.

In the polymerization, it is possible to use customary additives, for example molecular weight regulators such as hydrogen or inert gases such as nitrogen or argon.

To prepare the components (a) and (b) of the propylene copolymer composition (B), preference is given to using catalyst systems based on one or more metallocene compounds of transition metals of group 3, 4, 5 or 6 or to the lanthanide or actinide groups of the Periodic Table of the Elements.

Particular preference is given to catalyst systems based on metallocene compounds of the formula (I),

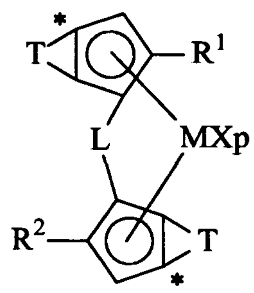

(I)

wherein:

M is an atom of a transition metal selected from those belonging to group 3, 4, 5, 6 or to the lanthanide or actinide

groups in the Periodic Table of the Elements; preferably M is titanium, zirconium or hafnium;

P is an integer from 0 to 3, preferably p is 2, being equal to the formal oxidation state of the metal M minus 2;

X equal or different to each other, is a hydrogen atom, a halogen atom, or a R, OR, $OSO_2CF_3$, OCOR, SR, $NR_2$ or $PR_2$ group, wherein R is a linear or branched, saturated or unsaturated $C_1$-$C_{20}$ alkyl, $C_3$-$C_{20}$ cycloalkyl, $C_6$-$C_{20}$ aryl, $C_7$-$C_{20}$ alkylaryl or $C_7$-$C_{20}$ arylalkyl radical, optionally containing heteroatoms belonging to groups 13-17 of the Periodic Table of the Elements; or two X can optionally form a substituted or unsubstituted butadienyl radical or a OR'O group wherein R' is a divalent radical selected from $C_1$-$C_{20}$ alkylidene, $C_6$-$C_{40}$ arylidene, $C_7$-$C_{40}$ alkylarylidene and $C_7$-$C_{40}$ arylalkylidene radicals; preferably X is a hydrogen atom, a halogen atom or a R group; more preferably X is chlorine or a methyl radical;

L is a divalent bridging group selected from $C_1$-$C_{20}$ alkylidene, $C_3$-$C_{20}$ cycloalkylidene, $C_6$-$C_{20}$ arylidene, $C_7$-$C_{20}$ alkylarylidene, or $C_7$-$C_{20}$ arylalkylidene radicals optionally containing heteroatoms belonging to groups 13-17 of the Periodic Table of the Elements, and silylidene radical containing up to 5 silicon atoms such as $SiMe_2$, $SiPh_2$; preferably L is selected from the group consisting of is $Si(CH_3)_2$, $SiPh_2$, SiPhMe, $SiMe(SiMe_3)$, $CH_2$, $(CH_2)_2$, $(CH_2)_3$ and $C(CH_3)_2$;

$R^1$ is a linear or branched, saturated or unsaturated $C_1$-$C_{40}$-alkyl radical, optionally containing one or more heteroatoms belonging to groups 13-17 of the Periodic Table of the Elements; preferably $R^1$ is a methyl or ethyl radical;

$R^2$ is a branched $C_1$-$C_{40}$-alkyl radical; preferably $R^2$ is a group of formula (II)

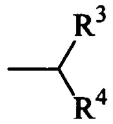

(II)

wherein $R^3$ and $R^4$, equal to or different from each other, are linear or branched, saturated or unsaturated $C_1$-$C_{10}$-alkyl radicals optionally containing one or more heteroatoms belonging to groups 13-17 of the Periodic Table of the Elements;

T equal to or different from each other, is a moiety of formula (IIIa) or (IIIb):

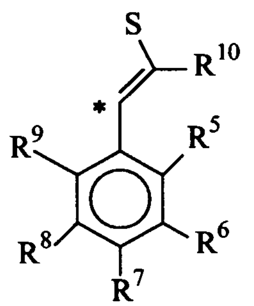

(IIIa)

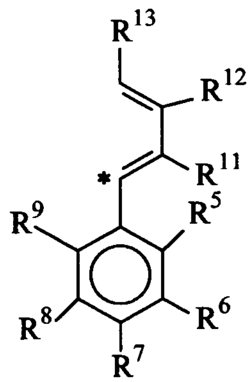

(IIIb)

wherein:

the atom marked with the symbol * is bonded to the atom marked with the same symbol in the compound of formula (I); $R^5$, $R^6$, $R^7$, $R^8$ and $R^9$, equal to or different from each other, are hydrogen atoms or a linear or branched, saturated or unsaturated $C_1$-$C_{40}$-alkyl, $C_3$-$C_{40}$-cycloalkyl, $C_6$-$C_{40}$-aryl, $C_7$-$C_{40}$-alkylaryl, or $C_7$-$C_{40}$-arylalkyl radicals, optionally containing one or more heteroatoms belonging to groups 13-17 of the Periodic Table of the Elements; or two or

more $R^5$, $R^6$, $R^7$, $R^8$ and $R^9$ can join to form a saturated or unsaturated 4-7 membered ring, said ring can bear $C_1$-$C_{20}$ alkyl substituents;

$R^{10}$ is a hydrogen atom or a linear or branched, saturated or unsaturated $C_1$-$C_{20}$-alkyl, $C_3$-$C_{20}$-cycloallcyl, $C_6$-$C_{20}$-aryl, $C_7$-$C_{20}$-alkylaryl, or $C_7$-$C_{20}$-arylalkyl radicals, optionally containing one or more heteroatoms belonging to groups 13-17 of the Periodic Table of the Elements; preferably $R^{10}$ is a hydrogen atom or a linear or branched, saturated $C_1$-$C_{20}$-alkyl radical, such as a methyl, ethyl or isopropyl radical;

$R^{11}$, $R^{12}$ and $R^{13}$, equal to or different from each other, are hydrogen atoms or a linear or branched, saturated or unsaturated $C_1$-$C_{20}$-alkyl, $C_3$-$C_{20}$-cycloalkyl, $C_6$-$C_{20}$-aryl, $C_7$-$C_{20}$-alkylaryl, or $C_7$-$C_{20}$-arylalkyl radicals, optionally containing one or more heteroatoms belonging to groups 13-17 of the Periodic Table of the Elements; or two or more $R^{11}$, $R^{12}$ and $R^{13}$ can join to form a saturated or unsaturated 4-7 membered ring, said ring can bear $C_1$-$C_{20}$ alkyl substituents.

The compound of formula (I) is preferably in the racemic or racemic-like form. "Racemic-like" means that the benzo or thiophene moieties of the two π-ligands on the metallocene compound of formula (I) are on the opposite sides with respect to the plane containing the zirconium and the centre of the cyclopentadienyl moieties as shown in the following compound.

One preferred class of compounds of formula (I) is that wherein $R^5$, $R^6$, $R^8$ and $R^9$, are hydrogen atoms and $R^7$ is a group of formula $-C(R^{14})_3$ wherein $R^{14}$, equal to or different from each other, are a linear or branched, saturated or unsaturated $C_1$-$C_{10}$-alkyl, $C_3$-$C_{10}$-cycloalkyl, $C_6$-$C_{10}$-aryl, $C_7$-$C_{10}$-alkylaryl, or $C_7$-$C_{10}$-arylalkyl radicals, optionally containing one or more heteroatoms belonging to groups 13-17 of the Periodic Table of the Elements; preferably $R^{14}$ are linear $C_1$-$C_{10}$-alkyl radicals; more preferably they are methyl, or ethyl radicals.

A further preferred class of compounds of formula (I) is that wherein both T groups have formula (IIIb) and $R^5$, $R^6$, $R^7$, $R^8$ and $R^9$ have the meaning described above. Preferably in one T group, $R^{12}$ is a $C_1$-$C_{20}$ alkyl radical; preferably a $C_1$-$C_{10}$ alkyl radical; more preferably a methyl or ethyl group and in the other T group $R^{12}$ being hydrogen.

A further preferred class of compounds of formula (I) is that wherein one T group has formula (IIIa) and the other one has formula (IIIb) and $R^5$, $R^6$, $R^7$, $R^8$ and $R^9$ have the meaning described above.

A still further preferred class of compounds of formula (I) is that wherein both T groups have formula (IIIb), $R^5$, $R^6$, $R^7$, $R^8$ and $R^9$ have the meaning described above and $R^{11}$, $R^{12}$ and $R^{13}$ are hydrogen atoms

Compounds of formula (I) are known in the art, for example they can be prepared according to the disclosure of WO 01/48034, PCT/EP02/13552 and DE 10324541.3

It is also possible to use mixtures of various metallocene compounds or mixtures of various catalyst systems. However, preference is given to using only one catalyst system comprising one metallocene compound, which is used for the polymerization of the propylene copolymer (a) and the propylene copolymer (b).

The preferred catalyst systems based on metallocene compounds generally further comprise cation-forming compounds as co-catalysts. Suitable cation-forming compounds which are able to react with the metallocene compound to convert it into a cationic compound are, for example, compounds such aluminoxanes, a strong uncharged Lewis acid, an ionic compound having a Lewis-acid cation or an ionic compound containing a Brönsted acid as cation. The cation-forming compounds are frequently also referred to as compounds which form metallocenium ions.

As aluminoxanes, it is possible to use, for example, the compounds described in the International Patent Application WO 00/31090. Particularly useful compounds are open-chain or cyclic aluminoxane compounds of the formula (IV) or (V)

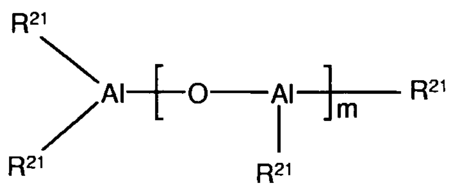

)

where

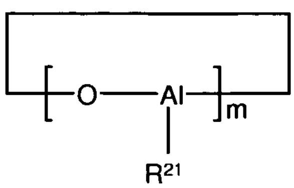

$R^{21}$ is a $C_1$-$C_4$-alkyl group, preferably a methyl or ethyl group, and
m is an integer from 5 to 30, preferably from 10 to 25.

The aluminoxane compounds can also be present in admixture with other metal alkyls, preferably aluminum alkyls. Furthermore, modifed aluminoxanes in which some of the hydrocarbon radicals or hydrogen atoms are replaced by alkoxy, aryloxy, siloxy or amide radicals may be used in place of the aluminoxane compounds of the formulae (IV) or (V). The aluminoxanes are preferably used in such an amount that the atomic ratio Al/M is in the range from 10:1 to 1000:1.

As strong, uncharged Lewis acids, preference is given to compounds of the formula (VI)

$$M2X1X2X3 \qquad (VI)$$

where
M2 is an element of group 13 of the Periodic Table of the Elements, in particular B, Al or G and preferably B, and
X1, X2 and X3 are each hydrogen, $C_1$-$C_{10}$-alkyl, $C_6$-$C_{15}$-aryl, alkylaryl, arylalkyl, haloalkyl or haloaryl each having from 1 to 10 carbon atoms in the alkyl radical and from 6 to 20 carbon atoms in the aryl radical, or fluorine, chlorine, bromine or iodine, in particular a haloaryl, preferably pentafluorophenyl. Further examples of strong, uncharged Lewis acids are mentioned in WO 00/31090. Particular preference is given to tris(pentafluorophenyl)borane. Strong uncharged Lewis acids suitable as cation-forming compounds also include the reaction products from the reaction of a boronic acid with two equivalents of a trialkylaluminum or the reaction products from the reaction of a trialkylaluminum with two equivalents of an acidic fluorinated, in particular perfluorinated, carbon compound such as pentafluorophenol or bis(pentafluorophenyl) borinic acid.

Suitable ionic compounds containing Lewis-acid cations include salt-like compounds of the cation of the formula (XII)

$$[(Y^{a+})Q1Q2...Qz]^{d+} \qquad (VII)$$

where
Y is an element of groups 1 to 16 of the Periodic Table of the Elements,
Q1 to Qz are singly negatively charged groups such as $C_1$-$C_{28}$-alkyl, $C_6$-$C_{15}$-aTyl, alkylaryl, arylalkyl, haloalkyl, haloaryl each having from 6 to 20 carbon atoms in the aryl radical and from 1 to 28 carbon atoms in the alkyl radical, $C_3$-$C_{10}$-cycloalkyl which may be substituted by $C_1$-$C_{10}$-alkyl groups, or halogen, $C_1$-$C_{28}$-alkoxy, $C_6$-$C_{15}$-aryloxy, silyl or mercapto groups,

a is an integer from 1 to 6 and
z is an integer from 0 to 5,
d is the difference a-z, but d is greater than or equal to 1.

Particularly useful ionic compounds having a Lewis-acid cation are carbonium cations, oxonium cations and sulfonium cations and also cationic transition metal complexes. Particular mention may be made of the triphenylmethyl cation, the silver cation and the 1,1'-dimethylferrocenyl cation. They preferably have non-coordinating counterions, in particular boron compounds as are mentioned in WO91/09882, preferably tetrakis(pentafluorophenyl)borate.

Ionic compounds containing Brönsted acids as cations preferably likewise have non-coordinating counterions. As Brönsted acids, particular preference is given to protonated amine or aniline derivatives. Preferred ionic compounds are, in particular, N,N-dimethylanilinium tetrakis(pentafluorophenyl)borate, N,N-dimethylcyclohexylammonium tetrakis (pentafluorophenyl)borate and N,N-dimethylbenzylammonium tetrakis(pentafluorophenyl)borate. Further suitable cation-forming compounds are listed in WO00/31090.

The amount of strong, uncharged Lewis acids, ionic compounds having Lewis-acid cations or ionic compounds containing Brönsted acids as cations is preferably from 0.1 to 20 equivalents, preferably from 1 to 10 equivalents, based on the metallocene compound. Suitable cation-forming compounds also include boron-aluminum compounds such as di[bis(pentafluorophenylboroxy)]methylalane. Such boron-aluminum compounds are disclosed, for example, in WO99/06414.

It is also possible to use mixtures of all of the abovementioned cation-forming compounds. Preferred mixtures comprise aluminoxanes, in particular methylaluminoxane, and an ionic compound, in particular one containing the tetrakis (pentafluorophenyl)borate anion, and/or a strong uncharged Lewis acid, in particular tris(pentafluorophenyl)borane.

Preference is given to using both the metallocene compound and the cation-forming compound in a solvent, preferably aromatic hydrocarbons having from 6 to 20 carbon atoms, in particular xylenes and toluene.

The preferred catalyst systems based on metallocene compounds can further comprise, as additional component, at least one metal compound of the formula (VIII),

$$M3\ (R^{22})r\ (R^{23})s\ (R^{24})t \qquad (VIII)$$

where

M3 is an alkali metal, an alkaline earth metal or a metal of group 13 of the Periodic Table, i.e. boron, aluminum, gallium, indium or thallium,

$R^{22}$ is hydrogen, $C_1$-$C_{10}$-alkyl, $C_6$-$C_{15}$-aryl, alkylaryl or arylalkyl each having from 1 to 10 carbon atoms in the alkyl part and from 6 to 20 carbon atoms in the aryl part,

$R^{23}$ and $R^{24}$ are each hydrogen, halogen, $C_1$-$C_{10}$-alkyl, $C_6$-$C_{15}$-aryl, alkylaryl, arylalkyl or alkoxy each having from 1 to 10 carbon atoms in the alkyl radical and from 6 to 20 carbon atoms in the aryl radical,

r is an integer from 1 to 3 and

s and t are integers from 0 to 2, where the sum r+s+t corresponds to the valence of M3, where the metal compound of the formula (VIII) is not identical to the cation-forming compound. Particularly preferred metal compounds of the formula (VIII) are n-butyllithium, n-butyl-n-octylmagnesium, n-butyl-n-heptylmagnesium, tri-n-hexylaluminum, triisobutylaluminum, triethyl-aluminum and trimethylaluminum and mixtures thereof. The metal compound of the formula (VIII), is preferably used in such an amount that the molar ratio M3/M ranges from 800:1 to 1:1.

The preferred catalyst systems based on metallocene compounds are usually used in supported form. Suitable supports are, for example, porous organic or inorganic inert solids such as finely divided polymer powders, talc, sheet silicates or inorganic oxides. Inorganic oxides suitable as supports may be found among the oxides of elements of groups 2, 3, 4, 5, 13, 14, 15 and 16 of the Periodic Table of the Elements. Preference is given to oxides or mixed oxides of the elements calcium, aluminum, silicon, magnesium or titanium and also corresponding oxide mixtures. Other inorganic oxides which can be used alone or in combination with the abovementioned oxidic supports are, for example, $ZrO_2$ or $B_2O_3$. Preferred oxides are silicon dioxide and aluminum oxide, in particular silica gels or pyrogenic silicas. An example of a preferred mixed oxide is calcined hydrotalcite.

The support materials used preferably have a specific surface area in the range from 10 to 1000 $m^2/g$, preferably from 50 to 500 $m^2/g$ and in particular from 200 to 400 $m^2/g$, and a pore volume in the range from 0.1 to 5 ml/g, preferably from 0.5 to 3.5 ml/g and in particular from 0.8 to 3.0 ml/g. The mean particle size of the finely divided supports is generally in the range from 1 to 500 $\mu$m, preferably from 5 to 350 $\mu$m and in particular from 10 to 100 $\mu$m.

The propylene homopolymer (A) and the propylene copolymer composition (B) may further comprise customary amounts of customary additives known to those skilled in the art, e.g. stabilizers, clarifiers, lubricants and mold release agents, fillers, nucleating agents, antistatics, plasticizers, dyes, pigments or flame retardants. In general, these are incorporated during granulation of the pulverulent product obtained in the polymerization. Customary stabilizers include antioxidants such as sterically hindered phenols, sterically hindered amines or UV stabilizers, processing stabilizers such as phosphites or phosphonites, acid scavengers such as calcium stearate or zinc stearate or dihydrotalcite, as well as calcium, zinc and sodium caprylate salts. In general, the propylene polymers (A) and (B) contain one or more stabilizers in amounts of up to 5 wt%, preferably up to 2 wt%.

Suitable lubricants and mold release agents are, for example, fatty acids, calcium, sodium or zinc salts of fatty acids, fatty acid amides or low molecular weight polyolefin waxes. Possible fillers are, for example, talc, chalk or glass fibers.

Examples of suitable nucleating agents are inorganic additives such as talc, silica or kaolin, salts of monocarboxylic or polycarboxylic acids, e.g. sodium benzoate or aluminum tert-butylbenzoate, dibenzylidenesorbitol or its $C_1$-$C_8$-alkyl-substituted derivatives such as methyldibenzylidenesorbitol, ethyldibenzylidenesorbitol or dimethyldibenzylidenesorbitol or salts of diesters of phosphoric acid, e.g. sodium 2,2'-methylenebis(4,6,-di-tert-butylphenyl)phosphate. Preferably, the propylene copolymer composition (B) contains from 0.1 to 1 wt%, particularly preferably from 0.15 to 0.25 wt%, of a nucleating agent.

The at least one outer layer of the BOPP film of the present invention can be made of olefin polymers, i.e. polymers and copolymers of linear alpha-olefins having 2 to 10 carbon atoms, polymers and copolymers of cyclic olefins, non-olefin polymers such as polystyrenes, polyvinylchlorides, polyamides, polyesters and polycarbonates.

The at least one outer layer contains preferably at least one olefin polymer selected among:

(i) isotactic or mainly isotactic propylene homopolymers and homo- or copolymers of ethylene, such as HDPE, LDPE and LLDPE; and

(ii) crystalline copolymers of propylene with ethylene and/or alpha-olefins having 4 to 10 carbon atoms, such as 1-butene, 1-hexene, 4-methyl-1-pentene, 1-octene, wherein the total comonomer content ranges from 0.05 to 20 wt% with respect to the weight of the copolymer, or mixtures of said copolymers with isotactic or mainly isotactic propylene homopolymers; and

(iii) elastomeric copolymers of ethylene with propylene and/or an alpha-olefin having 4 to 10 carbon atoms, optionally containing minor quantities (in particular, from 1% to 10 wt%) of a diene, such as butadiene, 1,4-hexadiene, 1,5-hexadiene, ethylidene-1-norbornene; and

(iv) heterophasic copolymers comprising (1) a propylene homopolymer and/or one of the copolymers of item (ii), and (2) an elastomeric fraction comprising one or more of the copolymers of item (iii), typically prepared according to known methods by mixing the components in the molten state, or by sequential polymerization, said heterophasic copolymer generally containing the said elastomeric fraction in quantities from 5% to 80 wt% with respect to the weight of the elastomeric fraction; and

(v) 1-butene homopolymers or copolymers with ethylene and/or alpha-olefins having 5 to 10 carbon atoms.

The above-mentioned polymers forming the outer layer(s) of the multilayer BOPP films of the invention may comprise customary additives known to those skilled in the art, e.g. stabilizers, clarifiers, lubricants and mold release agents, fillers, nucleating agents, antistatics, plasticizers, dyes, pigments or flame retardants.

For the manufacturing of the multilayer BOPP films of the invention, the components (A) and (B) of the support layer are dry-mixed and fed with the resins for the outer layers to the relevant extruders; the molten polymer materials are extruded thought a narrow slit or die (that can be a circular die in case of the double-bubble process), cooled and subsequently reheated to a temperature at which the polymer materials are partially melted to undergo orientation. The multilayer BOPP films of the present invention can be oriented using well known processes for the manufacturing of oriented films, i.e. the double-bubble (or tubular) process, the tenter process (conventional or modified tenter-line) or simultaneous stretching technologies, such as LISIM® or MESIM® Technology. Preferably, the multilayer BOPP films of the invention are manufactured by the tenter process, sequentially stretching the film in the machine direction (MD) and in the direction across the machine axis (transverse direction, TD). The MD and TD stretching can be equal (balanced orientation) or different.

It has been surprisingly found that the multilayer biaxially oriented propylene polymer films of the present invention possess a good balance of physical mechanical properties, i.e. rigidity and toughness, excellent optical properties and additionally they have high permeability to oxygen and water vapor. Unexpectedly, the multilayer BOPP films of the present invention can be biaxially oriented to prepare multilayer heat-shrinkable BOPP films showing high shrinkage values.

The multilayer BOPP films of the present invention comprise at least three layers: a support layer and two outer layers, wherein said outer layers, that can be equal or different, adhere to the two different surfaces of the support layer. The multilayer BOPP films of the instant invention may have a A/B/C or a A/B/A structure, the A/B/A structure being preferred. The support layer B is generally thicker than the outer layers A. Preferably the A/B/A structure is symmetric, the outer layers A having the same thickness and composition. The thickness of the multilayer BOPP films of the present invention having A/B/A structure is generally below 100 $\mu$m, preferably below 80 $\mu$m, even more preferably is of 40 $\mu$m or less.

According to a preferred embodiment, the outer layer of the multilayer BOPP films of the present invention contains a propylene polymer composition comprising:

(I) 20-80 wt%, preferably 20-60 wt%, more preferably 30-50 wt%, of one or more propylene copolymers selected from the group consisting of (I-1) propylene/ethylene copolymers containing 1-7 wt% of ethylene; (I-2) copolymers of propylene with one or more $C_4$-$C_8$ alpha-olefins, containing 2-10 wt% of the $C_4$-$C_8$ alpha-olefins; (I-3) copolymers of propylene with ethylene and one or more $C_4$-$C_8$ alpha-olefins, containing 0.5-4.5 wt% of ethylene and 2-6 wt% of $C_4$-$C_8$ alpha-olefins, provided that the total content of ethylene and $C_4$-$C_8$ alpha-olefins in (I-3) be equal to or lower than 6.5 wt%;

(II) 20-80 wt%, preferably 40-80 wt%, more preferably 50-70 wt%, of one or more propylene copolymers selected from the group consisting of (II-1) copolymers of propylene with one or more $C_4$-$C_8$ alpha-olefins, containing from more than 10 wt% to 30 wt% of $C_4$-$C_8$ alpha-olefins; (II-2) copolymers of propylene with ethylene and one or more $C_4$-$C_8$ alpha-olefins, containing 1-7 wt% of ethylene and 6-15 wt% of $C_4$-$C_8$ alpha-olefins.

According to a further preferred embodiment, the multilayer BOPP films of the present invention have a A/B/A structure wherein both outer layers A contain the propylene polymer composition described herein above.

Preferably the alpha-olefin is 1-butene. Said polyolefin compositions can be prepared by mixing the components in the molten state, for example in a mixer having a high homogenizing power or in an extruder or, and more preferably, can be obtained directly by synthesis using a sequential polymerization process using stereospecific Ziegler-Natta

catalysts as described in the European Patents 45977 and 728769.

In a still further preferred embodiment, the BOPP films have A/B/A structure, a support layer according to the present invention and the outer layers A containing a propylene polymer composition comprising:

(I) 25-45 wt% of a copolymer of propylene and ethylene having 2-5 wt% of ethylene units, and
(II) 55-75 wt% of a terpolymer of propylene, ethylene and one or more $C_4$-$C_{10}$ alpha-olefins having 2-5 wt% of ethylene units and 6-12 wt% of alpha-olefin units.

Preferably the alpha-olefin is 1-butene. Said polyolefin composition can be prepared by mixing the components in the molten state, for example in a mixer having a high homogenizing power or in an extruder or, and more preferably, can be obtained directly by synthesis using a sequential polymerization process using stereospecific Ziegler-Natta catalysts, said catalysts being described in the European Patents EP45977 and EP728769.

The multilayer BOPP films of the preferred embodiments preferably have the following set of properties:

- water vapor transmission rate ("WVTR"), measured according to ASTM F1249, greater than 5.5 gm/$m^2$-day; and/or
- oxygen transmission rate ("OTR"), measured according to ASTM D3985, greater than 1900 cc/$m^2$-day; and/or
- haze value lower than 2.5%, preferably equal to or lower then 1.5%; and/or
- clarity higher than 90%, preferably higher than 95%; and/or
- gloss higher than 85%, preferably higher than 90%.

When manufactured into heat-shrinkable films, the multilayer BOPP films of the preferred embodiment of the present invention exhibit superior transparency after shrinkage. In addition to the above-mentioned properties, the heat-shrinkable multilayer BOPP films of the invention preferably have:

- free-shrinkage in at lest one direction higher than 10% at 120°C and higher than 20% at 135°; and/or
- free-shrinkage of higher than 10% at 120°C and higher then 20% at 135°C in one direction and free-shrinkage lower than 5% at 120°C and lower than 8% at 135°C in the other direction; and/or
- haze value before shrinkage of less than 2.5%, particularly of less then 2.0%, and a haze value after shrinkage lower than 3.0%.

Said properties are measured on a 40μm-thick film having A/B/A (1/38/1 μm) structure. For the multilayer BOPP films of the present invention, said properties mainly depend on the support layer and they can vary if measured on BOPP films having a different thickness of the support layer.

Additionally, the BOPP films of preferred embodiments also possess the following set of properties:

- WVTR, measured according to ASTM F1249, greater than 6.5 gm/$m^2$-day, preferably greater than 8.0 gm/$m^2$-day, more preferably greater than 11.0 gm/$m^2$-day; and/or
- OTR, measured according to ASTM D3985, greater than 2200 cc/$m^2$-day, preferably greater than 2700 cc/$m^2$-day, more preferably greater than 3500 cc/$m^2$-day; and/or
- haze value of less than 2.0%, preferably less then 1.5%; and/or
- clarity higher than 95%; and/or
- gloss higher than 90%;

said properties are measured on a 20μm-thick film having A/B/A (1/18/1 μm) structure.

The multilayer BOPP films of the invention possess properties that make them suitable for a wide variety of applications, in particular food packaging which typically requires low hexane extractable and xylene soluble values in combination with high transparency.

The following examples are given to illustrate and not to limit the present invention.

Examples

The data of the propylene polymer materials were obtained according to the following methods:

<u>Xylene-soluble faction</u>

2.5 g of polymer and 250 mL of o-xylene are introduced in a glass flask equipped with a refrigerator and a magnetical stirrer. The temperature is raised in 30 minutes up to the boiling pint of the solvent. The so obtained solution is then kept under reflux and stirring for further 30 minutes. The closed flask is then kept for 30 minutes in a bath of ice

and water and in thermostatic water bath at 25°C for 30 minutes as well. The solid thus obtained is filtered on quick filtering paper and the 100 ml of filtered liquid is poured in a previously weighed aluminum container, which is heated on a heating plate under nitrogen flow, to remove the solvent by evaporation. The container is then kept on an oven at 80°C under vacuum until constant weight is obtained. The residue is weighed to determine the percentage of xylene-soluble polymer. The xylene insoluble fraction is calculated by difference with respect to the initial sample weight.

Proportion of n-hexane soluble material

The proportion of n-hexane-soluble material was determined by extraction using a modified FDA method. About 2.5 g of polymer granules were weighed out and suspended in 1 L of n-hexane. The suspension was heated to 50°C ± 0.2°C over a period of 20-25 minutes while stirring and stirred for a further 2 hours at this temperature. The suspension was filtered through a glass frit which had been preheated to 50°C. About 350 g of the filtrate were weighed into an evaporator flask which had previously been dried over $P_2O_5$ in a desiccator for 12 hours. The filtrate was evaporated to about 20-30 ml at 60°C under reduced pressure on a rotary evaporator. The solution was transferred quantitatively with the aid of several rinses with warm hexane into a 200 ml evaporating basin which had previously been dried over $P_2O_5$ in a desiccator for 12 hours and weighed. The solution was evaporated to dryness on a hotplate while passing nitrogen over it. After evaporation, the evaporating basin was dried over $P_2O_5$ at 200 mbar in a desiccator for 12 hours, weighed and the extraction residue was determined. The same procedure was repeated without addition of polymer granules and the residue in pure n-hexane was determined. The residue in pure n-hexane was subtracted to determine the proportion of material which is extracted by n-hexane.

Comonomer (C2) content

By IR spectroscopy.

Molar ratio of feed gasses

Determined by gas-chromatography

Melt flow rate (MFR)

Determined according to ISO 1133 (230°C, 2.16 Kg)

Melting point

The determination of the melting point was carried out by means of DSC (Differential Scanning Calorimetry). The measurement was carried out in accordance with ISO3146 using a first heating step at a heating rate of 20oC per minute up to 200°C, a dynamic crystallization at a cooled rate of 20°C per minute down to 25°C and a second heating step at a heating rate of 20°C per minute back up to 200°C. The melting point is then the temperature at which the enthalpy versus temperature curve measured during the second heating step displays a maximum.

Number average molecular weight and weight average molecular weight,

The determination of the molecular weights and the molecular weight distribution Mw/Mn was carried out by gel permeation chromatography (GPC) at 145°C in 1,2,4-trichlorobenzene using a GPC apparatus model 150C from Waters. The data were evaluated by means of the Win-GPC software from HS-Entwicklungsgesellschaft für wissenschaftliche Hard- und Software GmbH, Ober-Hilbersheim. The columns were calibrated by means of polypropylene standards having molecular weights from 100 to 107 g/mol.

Stress at yield, Elongation at yield and Tensile E modulus

Determined according to ISO527. The tensile E modulus was measured in accordance with ISO 527-2:1993. The test specimen of type 1 having a total length of 150 mm and a parallel section of 80 mm was injection molded at a melt temperature of 250°C and a tool surface temperature of 30°C. To allow after-crystallization to occur, the test specimen was stored for 7 days under standard conditions of 23°C/50% atmospheric humidity. A test unit model Z022 from Zwick-Roell was used for testing. The displacement measurement system in the determination of the E modulus had a resolution of 1 μm. The testing velocity in the determination of the E modulus was 1 mm/min, otherwise 50 mm/min. The yield point in the determination of the E modulus was in the range 0.05%-0.25%.

Haze on the polymers

Determined on injection-molded plates having a thickness of 1 mm according to ASTM D1003. The test specimens were injection-molded plates having an edge length of 6 x 6cm and a thickness of 1 mm. The test specimens were injection molded at a melt temperature of 250°C and a tool surface temperature of 30°C. After a storage time of 7 days at room temperature for after-crystallization, the test specimens were clamped into the clamping device in front of the inlet orifice of a Hazegard System XL 211 from Pacific Scientific and the measurement was subsequently carried out. Testing was carried out at 23°C, with each test specimen being examined once in the middle. To obtain a mean, 5 test specimens were tested in each case.

Clarity, Haze and Gloss on films

Gloss: according to ASTM D2457-90
Clarity: according to ASTM 1746-70
Haze: according to ASTM D 1003-92

Young Modulus on films

The modulus was measured on the BOPP film according to ASTM D882-00.

Stress at break and Elongation at break on films

According to ASTM D882-00

WVTR

According to ASTM F1249-01
OTR
According to ASTM 3985-02e1

Preparation of propylene homopolymer (A)

The Ziegler-Natta catalyst was prepared according to the Example 5, lines 48-55 of the European Patent EP728769. The propylene homopolymer was prepared by polymerizing propylene in the presence of Triethylaluminium as co-catalyst and methylcyclohexyldimethoxysilane as external donor. The weight ratio Al-alkyl/external donor ratio was 43. The polymerization was carried out in liquid phase, in two continuous loop reactors in series. The temperature in the first and second loop was maintained in the range from 72° to 74°C; the pressure was maintained at 4.2 MPa. The molecular weight of the homopolymer was regulated by feeding 115 ppm of hydrogen into the first loop reactor and 1600 ppm into the second loop reactor. The obtained propylene homopolymer (A) had the following set of properties:

- Melt flow rate of 2.0 g/10 min;
- Xylene soluble fraction of 4.4 to 5.4%;
- Tensile modulus (1 mm/min)/ISO 527-1-2 of 1500 MPa;
- Tensile strain at break (50 mm/min)/ISO 527-1-2 of 410%;
- Vicat softening temperature (A50 (50°C/h 10N))/ISO 306 of 152°C.

Preparation of the copolymer (B)

Preparation of the metallocene catalyst: 3 kg of Sylopol 948 were placed in a process filter whose filter plate pointed downward and suspended in 15 L of toluene. 71 of 30% strength by weight MAO solution (from Albemarle) were metered in while stirring at such a rate that the internal temperature did not exceed 35°C. After stirring for a further 1 hour at a low stirrer speed, the suspension was filtered, firstly with no applied pressure and then under a nitrogen pressure of 3 bar. Parallel to the treatment of the support material, 2.0 L of 30% strength by weight MAO solution were placed in a reaction vessel, 92.3 g of rac-dimethylsilyl(2-methyl-4-(para-tert-butylphenyl)indenyl)(2-isopropyl-4-(para-tert-butylphenyl)indenyl)zirconium dichloride, prepared according to example 18 of WO 01/48034, were added, the solution was stirred for 1 hour and allowed to settle for a further 30 minutes. The solution was subsequently run onto the pretreated

support material with the outlet closed. After the addition was complete, the outlet was opened and the filtrate was allowed to run off. The outlet was subsequently closed, the filter cake was stirred for 15 minutes and allowed to stand for 1 hour. The liquid was then pressed out from the filter cake by means of a nitrogen pressure of 3 bar with the outlet open. 15 L of isododecane were added to the solid which remained, the mixture was stirred for 15 minutes and filtered. The washing step was repeated and the filter cake was subsequently pressed dry by means of a nitrogen pressure of 3 bar. For use in the polymerization, the total amount of the catalyst was re-suspended in 15 L of isododecane.

The process was carried out in two stirring autoclaves which were connected in series and each had a utilizable capacity of 200 L and were equipped with a free-standing helical stirrer. Both reactors contained an agitated fixed bed of finely divided propylene polymer. Propylene and ethylene were passed in gaseous form into the first polymerization reactor and polymerized at a mean residence time as shown in Table 1 by means of the metallocene catalyst at a pressure and temperature as shown in Table 1. The amount of metallocene catalyst metered in was such that the amount of polymer transferred from the first polymerization reactor into the second polymerization reactor corresponded, on average, to the amounts shown in Table 1. The metallocene catalyst was metered in together with the fresh propylene added to regulate the pressure. Triethylaluminum in the form of a 1 molar solution in heptane was likewise metered into the reactor. The propylene copolymer obtained in the first gas-phase reactor was transferred together with still active catalyst constituents into the second gas-phase reactor. There, the propylene-ethylene copolymer (b) was polymerized onto it at a total pressure, a temperature and a mean residence time as shown in Table 1. The weight ratio of the propylene copolymer (a) formed in the first reactor to the propylene copolymer (b) formed in the second reactor is shown in Table 1. Isopropanol (in the form of a 0.5 molar solution in heptane) was likewise metered into the second reactor. The weight ratio of the polymer formed in the first reactor to that formed in the second reactor was controlled by means of isopropanol which was metered into the second reactor in the form of a 0.5 molar solution in heptane and is shown in Table 1. To regulate the molecular weight, hydrogen was metered into the second reactor as necessary. The proportion of propylene-ethylene copolymer (b) formed in the second reactor is given by the difference of amount transferred and amount discharged according to the relationship (output from second reactor - output from first reactor)/output from second reactor.

Table 1

| *Reactor I - Copolymer (a)* | |
|---|---|
| Pressure [MPa] | 2.8 |
| Temperature [°C] | 73 |
| Triethylaluminum, 1M in heptane [ml/h] | 85 |
| Ethylene [% by volume] | 3 |
| Residence time [h] | 1.5 |
| C2 [% by weight] in powder | 1.2 |
| M.P. by DSC [°C] | 146.6 |
| Powder MFR (230°C/2.16 kg) [g/10 min] | 11 |
| Powder output [kg/h] | 31 |
| *Reactor II - Copolymer (b)* | |
| Pressure [MPa] | 1.81 |
| Temperature [°C] | 75 |
| Ethylene [% by volume] | 28 |
| Residence time [h] | 1.1 |
| Powder output [kg/h] | 45 |
| Powder MFR (230°C/2.16 kg) [g/10 min] | 11 |
| Content of propylene-ethylene copolymers (a) [% by weight] | 71 |
| Content of propylene-ethylene copolymer (b) [% by weight] | 27 |

The polymer powder obtained in the polymerization was admixed with a standard additive mixture in the granulation step. Granulation was carried out using a twin-screw extruder ZSK 30 from Werner & Pfleiderer at a melt temperature of 250°C. The propylene copolymer composition obtained contained 0.04% by weight of Irganox 1010 (from Ciba Specialty Chemicals), 0.07% by weight of Irgafos 168, (from Ciba Specialty Chemicals), and 0.04% by weight of calcium stearate.

The properties of the propylene copolymer composition are shown in Table 2. The data were determined on the propylene copolymer composition after addition of additives and granulation or on test specimens produced therefrom.

Table 2

| | |
|---|---|
| Total xylene soluble fraction [% by weight] | 18.5 |
| n-hexane soluble material [% by weight] | < 2.0 |
| C2 content of propylene-ethylene copolymer (b) | 10 |
| MFR (230°C/2,16 kg) [g/10 min] | 10.8 |
| Molecular weight distribution Mw/Mn | 2.4 |
| DSC melting point [°C] | 145 |
| Tensile E modulus [MPa] | 675 |
| Stress at yield [N/mm2] | 21.6 |
| Elongation at yield [%] | 13.0 |
| Haze (1 mm) [%] | 34 |

Examples 1 and 2

40μm-thick biaxially oriented heat-shrinkable films having A/B/A (1/38/1 μm) structure were prepared as follows:

Outer layers A

Propylene polymer composition comprising:

(I) 35 wt% of a propylene/ethylene copolymer containing 3.25 wt% of ethylene units; and
(II) 65 wt% of a propylene/ethylene/1-butene copolymers having 3.25 wt% of ethylene units and 9.2 wt% butene units.

The composition had a MFR (230°C/2.16Kg/ISO 1133) of 5.5 g/10 min., xylene soluble fraction of 91 wt% and a DSC melting peak of 135°C. The composition was added with 1000 ppm of anti-blocking agent.

Support layer B

In Example 1 the support layer was a blend of 70 wt% of propylene homopolymers (A) and 30 wt% of propylene copolymer (B).

In Example 2 the support layer was a blend of 40 wt% of propylene homopolymer (A) and 60 wt% of propylene copolymer (B).

The BOPP heat-shrinkable films were prepared in a Brueckner pilot line under the processing conditions indicated in the following Table 3. The film properties are reported on Tables 4 to 6.

Table 3

| | Example 1 | Example 2 |
|---|---|---|
| Main extruder | | |
| Temperatures in different zones (°C) | From 220 to 235 | From 220 to 235 |
| Die | 235 | 235 |
| Pressure (bar) | | |
| before filter | 237 | 208 |
| after filter | 177 | 156 |
| Rounds/min | 58 | 55 |
| Ampere | 186 | 182 |

(continued)

| | Example 1 | Example 2 |
|---|---|---|
| Main extruder | | |
| before die | 77 | 73 |
| PRIMARY SHEET | | |
| Chill roll speed (m/min) | 12 | 12 |
| MDO ROLLS | | |
| Pre-heating Temp (°C) | 116 | 116 |
| Stretching Temp (°C) | 116 | 116 |
| Annealing Temp (°C) | 120 | 120 |
| Stretching rate | 3x | 3.5x |
| TDO OVEN | | |
| Pre-heating Temp (°C) | 163 | 163 |
| Stretching Temp (°C) | 130 | 130 |
| Annealing Temp (°C) | 68 | 68 |
| Stretching rate | 6x | 6x |
| Line speed (m/min) | 36 | 43 |

Table 4: Free shrinkage test

| The free shrinkage test was carried out on a 100 x 100 mm sample. The sample was put in an air circulating oven at 120° and 135°C for 5 min and the free-shrinkage of the specimens was recorded. | | | | |
|---|---|---|---|---|
| | Free shrinkage at 120°C (%) | | Free shrinkage at 135°C (%) | |
| | MD | TD | MD | TD |
| Example 1 | 6 | 13 | 9 | 25 |
| Example 2 | 5 | 17 | 8 | 30 |

Table 5: Optical properties of the films before shrinkage.

| | Haze (%) | Clarity (%) | Gloss (%) |
|---|---|---|---|
| Example 1 | 1.4 | 98 | 93 |
| Example 2 | 1.5 | 98 | 93 |

Table 6: optical properties of the films after free-shrinkage

| | Haze (%) | | Clarity (%) | |
|---|---|---|---|---|
| | 120°C | 135°C | 120°C | 135°C |
| Example 1 | 2.2 | 1.5 | 97 | 96 |
| Example 2 | 2.7 | 2.8 | 97 | 95 |

The film optics of the BOPP films of the invention are extremely good before as well as after free-shrinkage at temperatures of 120° and 135°C as indicated by the haze values of Tables 5 and 6. Moreover, the value of the free-shrinkage of the heat-shrinkable multilayer BOPP film according to the invention is significantly high which renders said films suitable for new shrink films applications.

Example 3

40 micron biaxially oriented film having A/B/A (1/38/1 micron) structure was prepared using for the outer and support layers the same resins of Example 1. The support layer contained 35 wt% of component (A) and 65 wt% of component (B).

The BOPP film was prepared in a Brueckner pilot line under the processing conditions indicated in the following Table 7. Film properties are reported in Table 8. The Oxygen Transmission Rate (OTR) was determined on a Oxtran 2/61 (2004) supplied by Mocon/Lippke at a temperature of 23°C at dry conditions (<5%RH); the Water Vapour Transmission Rate (WVTR) was determined at 38°C with a relative humidity of 90% on a Permatran W3/61 (23004) from Mocon/Lippke.

Table 7

| | Example 3 |
|---|---|
| EXTRUSION CONDITIONS | |
| Main extruder | |
| Temperatures in different zones (°C) | From 220 to 260°C |
| Die | 260°C |
| Pressure (bar) | |
| before filter | 174 |
| after filter | 131 |
| Rounds/min | 76 |
| Ampere | 180 |
| before die | 57 |
| PRIMARY SHEET | |
| Chill roll speed (m/min) | 16 |
| MDO ROLLS | |
| Stretching rate | 4x |
| TDO OVEN | |
| Stretching rate | 8.4x |
| Line speed | 65 |

Table 8

| | | Example 3 |
|---|---|---|
| Haze (%) | | 2.4 |
| Clarity (%) | | 94 |
| Gloss (%) | | 88 |
| Tensile strength at break (15 mm/min) [MPa] | MD | 88 |
| | TD | 159 |
| Elongation at break (15 mm/min) [%] | MD | 172 |
| | TD | 29 |
| OTR (cc/$m^2$.day) | | 1985 |
| WVTR (g/m2.day) | | 5.5 |

Examples 4 and 5

20 micron biaxially oriented films having A/B/A (1/18/1 micron) structure were prepared using for the outer and support layers the same resins as indicated in Example 1.

In Example 4 the support layer was a blend of 70 wt% of propylene homopolymer (A) and 30 wt% of propylene

copolymer (B).

In Example 5 the support layer was a blend of 40 wt% of propylene homopolymer (A) and 60 wt% of propylene copolymer (B).

The BOPP films were prepared in a Brueckner pilot line under the processing conditions indicated in the following Table 9. Films properties are reported in Table 10. The OTR and the WVTR were determined as indicated in Example 3.

Table 9

| | Example 4 | Example 5 |
|---|---|---|
| EXTRUSION CONDITIONS | | |
| Main extruder | | |
| Temperatures in different zones (°C) | From 220 to 235 | From 220 to 235 |
| Die | 235 | 235 |
| Pressure (bar) | | |
| before filter | 210 | 181 |
| after filter | 159 | 138 |
| Rounds/min | 39 | 39 |
| Ampere | 175 | 153 |
| PRIMARY SHEET | | |
| Chill roll speed (m/min) | 13.5 | 12 |
| MDO ROLLS | | |
| Pre-heating Temp (°C) | 116 | 116 |
| Stretching Temp (°C) | 116 | 116 |
| Annealing Temp (°C) | 110 | 110 |
| Stretching rate | 4.5x | 4.5x |
| TDO OVEN | | |
| Pre-heating Temp (°C) | 168 | 168 |
| Stretching Temp (°C) | 145 | 145 |
| Annealing Temp (°C) | 135 | 135 |
| Stretching rate | 6x | 6x |
| Line speed | 62 | 56 |

Table 10

| | | Example 4 | Example 5 |
|---|---|---|---|
| Haze (%) | | 1.0 | 1.4 |
| Clarify (%) | | 99 | 98 |
| Gloss (%) | | 93 | 92 |
| Dart Drop (ASTM D1709-85) [g] | | 500 | 292 |
| Puncture resistance - Energy at break (ASTM D4649-A5:2000-250mm/min) [J] | | 4.1 | 3.69 |
| Young Modulus (15 mm/min) [MPa] | MD | 1385 | 1057 |
| | TD | 2415 | 1504 |
| Tensile strength at break (15 mm/min) [MPa] | MD | 131 | 75 |
| | TD | 186 | 99 |
| Elongation at break (15 mm/min) [%] | MD | 106 | 129 |
| | TD | 52 | 78 |
| OTR (cc/m$^2$.day) | | 2758 | 3880 |

(continued)

| | Example 4 | Example 5 |
|---|---|---|
| WVTR (g/m$^2$.day) | 8.5 | 11.8 |

## Claims

1. A multilayer biaxially oriented propylene polymer film, comprising at least three layers **characterized in that** the support layer of said multilayer film comprises:

   (A) 15 to 75 wt% of a propylene homopolymer and
   (B) 25 to 85 wt% of a propylene copolymer composition comprising (percent of (a) and (b) based on the component (B)):

      (a) 50 to 85 wt% of a propylene copolymer containing from 0.05 to 1.5 wt% of alpba-olefin units having from 2 to 10 carbon atoms other than propylene; and
      (b) 15 to 50 wt% of a Propylene copolymer containing less than 20 wt% of alpba-olefin units having from 2 to 10 carbon atoms other than propylene.

2. The multilayer biaxially oriented propylene polymer film according to claim 1, wherein the support layer comprises 35 to 75 wt% of component (A) and 25 to 75 wt% of component (B).

3. The multilayer biaxially oriented propylene polymer film according to claim 1 or 2, wherein the copolymer (a) contains from 1.01 to 1.3 wt% of alpha-olefin units.

4. The multilayer biaxially oriented propylene polymer film according to any of claims 1 to 3, wherein the copolymer (b) contains from 5 to 1 wt% of alpha-olefin units.

5. The multilayer biaxially oriented propylene polymer film according to any of claims 1 to 4, wherein the alpha-olefin is ethylene or 1-butene.

6. The multilayer biaxially oriented propylene polymer film according to any of claims 1 to 5, wherein he at least one outer layer contains at least one olefin polymer selected among:

   (i) isotactic or mainly isotactic propylene homopolymers and homo- or copolymers of ethylene; and
   (ii) crystalline copolymers of propylene with ethylene and/or alpha-olefins having 4 to 10 carbon atoms, wherein the total comonomer content ranges from 0.05 to 20 wt% with respect to the weight of the copolymer, or mixtures of said copolymers with isotactic or mainly isotactic propylene homopolymers; and
   (iii) elastomeric copolymers of ethylene with propylene and/or an alpha-olefin having 4 to 10 carbon atoms; and
   (iv) heterophasic copolymers comprising (1) a propylene homopolymer and/or one of the copolymers of item (ii), and (2) an elastomeric fraction comprising one or more of the copolymers of item (iii), said heterophasic copolymer containing said elastomeric fraction in quantities from 5% to 80 wt% with respect to the weight of the elastomeric fraction;
   (v) 1-butene homopolymers or copolymers with ethylene and/or alpha-olefins having 5 to 10 carbon atoms.

7. The multilayer biaxially oriented propylene polymer film according to any of claims 1 to 6, wherein the multilayer film has a A/B/A structure.

8. The multilayer biaxially oriented propylene polymer film according to any of claims 1 to 7, wherein the at least one outer layer contains a propylene polymer composition comprising:

   (I) 20-80 wt% of one or more propylene copolymers selected from the group consisting of (I-1) propylene/ethylene copolymers containing 1-7 wt% of ethylene; (I-2) copolymers of propylene with one or more $C_4$-$C_8$ alpha-olefins, containing 2-10 wt% of the $C_4$-$C_8$ alpha-olefins; (I-3) copolymers of propylene with ethylene and one or more $C_4$-$C_8$ alpha-olefins, containing 0.5-4.5 wt% of ethylene and 2-6 wt% of $C_4$-$C_8$ alpha-olefins, provided that the total content of ethylene and $C_4$-$C_8$ alpha-olefins in (I-3) be equal to or lower than 6.5 wt%;
   (II) 20-80 wt% of one or more propylene copolymers selected from the group consisting of (II-1) copolymers of

propylene with one or more $C_4$-$C_8$ alpha-olefins, containing from more than 10 wt% to 30 wt% of $C_4$-$C_8$ alpha-olefins; (II-2) copolymers of propylene with ethylene and one or more $C_4$-$C_8$ alpha-olefins, containing 1-7 wt% of ethylene and 6-15 wt% of $C_4$-$C_8$ alpha-olefins.

**9.** The multilayer biaxially oriented propylene polymer film according to claim 7, wherein the outer layers A contain a propylene polymer composition comprising:

(I) 25-45 wt% of a copolymer of propylene and ethylene having 2-5 wt% of ethylene units, and
(II) 55-75 wt% of a terpolymer of propylene, ethylene and one or more $C_4$-$C_{10}$ alpha-olefins having 2-5 wt% of ethylene units and 6-12 wt% of alpha-olefin units.

**10.** The multilayer biaxially oriented propylene polymer film according to any of claims 1 to 9 having water vapor transmission rate, measured according to ASTM F1249, greater than 5.5 gm/m$^2$-day.

**11.** The multilayer biaxially oriented propylene polymer film according to any of claims 1 to 9 having oxygen transmission rate, measured according to ASTM D3985, greater than 1900 cc/m$^2$-day.

**12.** Heat-shrinkable multilayer biaxially oriented propylene polymer film according to any of claims 1 to 9 having free-shrinkage in at lest one direction higher than 10% at 120°C and higher than 20% at 135°.

**13.** Heat-shrinkable multilayer biaxially oriented propylene polymer film according to any of claims 1 to 9 having free-shrinkage higher than 10% at 120°C and higher then 20% at 135°C in one direction and free-shrinkage lower than 5% at 120°C and lower than 8% at 135°C in the other direction.

**14.** Heat-shrinkable multilayer biaxially oriented propylene polymer film according to any of claims 1 to 9 having haze value before shrinkage of less than 2.5% and haze value after shrinkage lower than 3.0%.

**Patentansprüche**

**1.** Mehrschichtige biaxial orientierte Propylenpolymerfolie, die aus mindestens drei Schichten besteht, **dadurch gekennzeichnet, dass** die Trägerschicht der mehrschichtigen Folie Folgendes umfasst:

(A) 15 bis 75 Gew.-% eines Propylenhomopolymers und
(B) 25 bis 85 Gew.-% einer Propylencopolymer-Zusammensetzung, umfassend (% von (a) und (b) bezogen auf die Komponente (B)):

(a) 50 bis 85 Gew.-% eines Propylencopolymers, das von 0,05 bis 1,5 Gew.-% $\alpha$-Olefineinheiten mit von 2 bis 10 Kohlenstoffatomen ausgenommen Propylen enthält; und
(b) 15 bis 50 Gew.-% eines Propylencopolymers, das weniger als 20 Gew.-% $\alpha$-Olefineinheiten mit von 2 bis 10 Kohlenstoffatomen ausgenommen Propylen enthält.

**2.** Mehrschichtige biaxial orientierte Propylenpolymerfolie nach Anspruch 1, wobei die Trägerschicht 35 bis 75 Gew.-% von Komponente (A) und 25 bis 75 Gew.-% Komponente (B) umfasst.

**3.** Mehrschichtige biaxial orientierte Propylenpolymerfolie nach einem der Ansprüche 1 oder 2, wobei das Copolymer (a) von 1,01 bis 1,3 Gew.-% $\alpha$-Olefineinheiten enthält.

**4.** Mehrschichtige biaxial orientierte Propylenpolymerfolie nach einem der Ansprüche 1 bis 3, wobei das Copolymer (b) von 5 bis 15 Gew.-% $\alpha$-Olefineinheiten enthält.

**5.** Mehrschichtige biaxial orientierte Propylenpolymerfolie nach einem der Ansprüche 1 bis 4, wobei das $\alpha$-Olefin Ethylen oder 1-Buten ist.

**6.** Mehrschichtige biaxial orientierte Propylenpolymerfolie nach einem der Ansprüche 1 bis 5, wobei die mindestens eine äußere Schicht mindestens ein Olefinpolymer enthält, das ausgewählt ist unter:

(i) isotaktischen oder hauptsächlich isotaktischen Propylenhomopolymeren und Ethylenhomopolymeren oder

-copolymeren; und

(ii) kristallinen Copolymeren aus Propylen mit Ethylen und/oder α-Olefinen mit 4 bis 10 Kohlenstoffatomen, wobei der Gesamtcomonomergehalt im Bereich von 0,05 bis 20 Gew.-% bezogen auf das Gewicht des Copolymers liegt, oder Gemischen der Copolymere mit isotaktischen oder hauptsächlich isotaktischen Propylenhomopolymeren; und

(iii) elastomeren Copolymeren aus Ethylen mit Propylen und/oder einem α-Olefin mit 4 bis 10 Kohlenstoffatomen; und

(iv) heterophasischen Copolymeren, umfassend (1) ein Propylenhomopolymer und/oder eines der Copolymere von Punkt (ii), und (2) einer elastomeren Fraktion, die ein oder mehr der Copolymere von Punkt (iii) umfasst, wobei das heterophasische Copolymer die elastomere Fraktion in Mengen von 5 bis 80 Gew.-% bezogen auf das Gewicht der elastomeren Fraktion enthält;

(v) 1-Butenhomopolymeren oder -copolymeren mit Ethylen und/oder α-Olefinen mit 5 bis 10 Kohlenstoffatomen.

**7.** Mehrschichtige biaxial orientierte Propylenpolymerfolie nach einem der Ansprüche 1 bis 6, wobei die mehrschichtige Folie eine A/B/A-Struktur aufweist.

**8.** Mehrschichtige biaxial orientierte Propylenpolymerfolie nach einem der Ansprüche 1 bis 7, wobei die mindestens eine äußere Schicht eine Propylenpolymer-Zusammensetzung enthält, umfassend:

(I) 20 bis 80 Gew.-% von einem oder mehr Propylencopolymer(en), das/die aus der Gruppe ausgewählt ist/sind, bestehend aus (I-1) Propylen-/Ethylencopolymeren, enthaltend 1 bis 7 Gew.-% Ethylen; (I-2) Copolymeren aus Propylen mit einem oder mehr $C_4$- bis $C_8$-α-Olefin(en), die 2 bis 10 Gew.-% der $C_4$- bis $C_8$-α-Olefine enthalten; (I-3) Copolymeren aus Propylen mit Ethylen und einem oder mehr $C_4$-bis $C_8$-α-Olefin(en), enthaltend 0,5 bis 4,5 Gew.-% Ethylen und 2 bis 6 Gew.-% $C_4$- bis $C_8$-α-Olefine, mit der Maßgabe, dass der Gesamtgehalt des Ethylens und der $C_4$- bis $C_8$-α-Olefine in (I-3) gleich oder niedriger als 6,5 Gew.-% ist;

(II) 20 bis 80 Gew.-% von einem oder mehr Propylencopolymer(en), das/die aus der Gruppe ausgewählt ist/sind, bestehend aus (II-1) Copolymeren aus Propylen mit einem oder mehr $C_4$- bis $C_8$-α-Olefinen, enthaltend von mehr als 10 bis 30 Gew.-% $C_4$- bis $C_8$-α-Olefine; (II-2) Copolymeren aus Propylen mit Ethylen und einem oder mehr $C_4$- bis $C_8$-α-Olefinen, enthaltend 1 bis 7 Gew.-% Ethylen und 6 bis 15 Gew.-% $C_4$- bis $C_8$-α-Olefine.

**9.** Mehrschichtige biaxial orientierte Propylenpolymerfolie nach Anspruch 7, wobei die äußeren Schichten A eine Propylenpolymer-Zusammensetzung enthalten, umfassend:

(I) 25 bis 45 Gew.-% eines Copolymers aus Propylen und Ethylen mit 2 bis 5 Gew.-% Ethyleneinheiten, und

(II) 55 bis 75 Gew.-% eines Terpolymers aus Propylen, Ethylen und einem oder mehr $C_4$- bis $C_{10}$-α-Olefinen mit 2 bis 5 Gew.-% Ethyleneinheiten und 6 bis 12 Gew.-% α-Olefineinheiten.

**10.** Mehrschichtige biaxial orientierte Propylenpolymerfolie nach einem der Ansprüche 1 bis 9, die eine Wasserdampfdurchlässigkeitsrate, gemessen nach ASTM F 1249, größer als 5,5 $g/m^2 \cdot$Tag aufweist.

**11.** Mehrschichtige biaxial orientierte Propylenpolymerfolie nach einem der Ansprüche 1 bis 9, die eine Sauerstoffdurchlässigkeitsrate, nach ASTM D3985 gemessen, größer als 1900 $cm^3/m^2 \cdot$Tag aufweist.

**12.** Wärmeschrumpfbare mehrschichtige biaxial orientierte Propylenpolymerfolie nach einem der Ansprüche 1 bis 9, die bei 120 °C eine freie Schrumpfung in mindestens einer Richtung höher als 10 % und bei 135 °C höher als 20 % aufweist.

**13.** Wärmeschrumpfbare mehrschichtige biaxial orientierte Propylenpolymerfolie nach einem der Ansprüche 1 bis 9, die bei 120 °C eine freie Schrumpfung höher als 10 % und bei 135 °C höher als 20 % in einer Richtung und bei 120 °C eine freie Schrumpfung niedriger als 5 % und bei 135 °C niedriger als 8 % in der anderen Richtung aufweist.

**14.** Wärmeschrumpfbare mehrschichtige biaxial orientierte Propylenpolymerfolie nach einem der Ansprüche 1 bis 9, die einen Trübungswert vor der Schrumpfung weniger als 2,5 % und einen Trübungswert nach der Schrumpfung niedriger als 3,0 % aufweist.

## Revendications

1. Film de polymère de propylène multicouche orienté biaxialement comprenant au moins trois couches, **caractérisé en ce que** la couche support dudit film multicouche comprend :

   (A) 15 à 75% en poids d'un homopolymère de propylène et
   (B) 25 à 85% en poids d'une composition de copolymère de propylène comprenant (pourcentage de (a) et de (b) sur base du composant (B)) :

      (a) 50 à 85% en poids d'un copolymère de propylène contenant 0,05 à 1,5% en poids d'unités alpha-oléfiniques comprenant 2 à 10 atomes de carbone autres que le propylène ; et
      (b) 15 à 50% en poids d'un copolymère de propylène contenant moins de 20% en poids d'unités alpha-oléfiniques comprenant 2 à 10 atomes de carbone autres que le propylène.

2. Film de polymère de propylène multicouche orienté biaxialement selon la revendication 1, la couche support comprenant 35 à 75% en poids du composant (A) et 25 à 75% en poids du composant (B).

3. Film de polymère de propylène multicouche orienté biaxialement selon la revendication 1 ou 2, le copolymère (a) contenant 1,01 à 1,3% en poids d'unités alpha-oléfiniques.

4. Film de polymère de propylène multicouche orienté biaxialement selon l'une quelconque des revendications 1 à 3, le copolymère (b) contenant 5 à 15% en poids d'unités alpha-oléfiniques.

5. Film de polymère de propylène multicouche orienté biaxialement selon l'une quelconque des revendications 1 à 4, l'alpha-oléfine étant l'éthylène ou le 1-butène.

6. Film de polymère de propylène multicouche orienté biaxialement selon l'une quelconque des revendications 1 à 5, ladite au moins une couche extérieure contenant au moins un polymère d'oléfine choisi parmi :

   (i) des homopolymères de propylène et des homopolymères ou des copolymères d'éthylène isotactiques ou principalement isotactiques ; et
   (ii) des copolymères cristallins de propylène et d'éthylène et/ou d'alpha-oléfines comprenant 4 à 10 atomes de carbone, la teneur totale en comonomère s'étendant de 0,05 à 20% en poids par rapport au poids du copolymère, ou des mélanges desdits copolymères et d'homopolymères de propylène isotactiques ou principalement isotactiques ; et
   (iii) des copolymères élastomères d'éthylène et de propylène et/ou d'une alpha-oléfine comprenant 4 à 10 atomes de carbone ; et
   (iv) des copolymères hétérophasiques comprenant (1) un homopolymère de propylène et/ou un des copolymères du point (ii), et (2) une fraction élastomère comprenant un ou plusieurs des copolymères du point (iii), ledit copolymère hétérophasique contenant ladite fraction élastomère en des quantités de 5% à 80% en poids par rapport au poids de la fraction élastomère ;
   (v) des homopolymères de 1-butène ou des copolymères de 1-butène et d'éthylène et/ou d'alpha-oléfines contenant 5 à 10 atomes de carbone.

7. Film de polymère de propylène multicouche orienté biaxialement selon l'une quelconque des revendications 1 à 6, le film multicouche présentant une structure A/B/A.

8. Film de polymère de propylène multicouche orienté biaxialement selon l'une quelconque des revendications 1 à 7, ladite au moins une couche extérieure contenant une composition de polymère de propylène comprenant :

   (I) 20-80% en poids d'un ou plusieurs copolymères de propylène choisis dans le groupe constitué par (I-1) des copolymères de propylène/éthylène contenant 1-7% en poids d'éthylène ; (I-2) des copolymères de propylène et d'une ou plusieurs alpha-oléfines en $C_4$-$C_8$, contenant 2-10% en poids d'alpha-oléfines en $C_4$-$C_8$ (I-3) des copolymères de propylène et d'éthylène et d'une ou plusieurs alpha-oléfines en $C_4$-$C_8$, contenant 0,5-4,5% en poids d'éthylène et 2-6% en poids d'alpha-oléfines en $C_4$-$C_8$, à condition que la teneur totale en éthylène et en alpha-oléfines en $C_4$-$C_8$ dans (I-3) soit égale ou inférieure à 6,5% en poids ;
   (II) 20-80% en poids d'un ou plusieurs copolymères de propylène choisis dans le groupe constitué par (II-1) des copolymères de propylène et d'une ou plusieurs alpha-oléfines en $C_4$-$C_8$, contenant plus de 10% en poids

à 30% en poids d'alpha-oléfines en $C_4$-$C_8$ ; (II-2) des copolymères de propylène et d'éthylène et d'une ou plusieurs alpha-oléfines en $C_4$-$C_8$, contenant 1-7% en poids d'éthylène et 6-15% en poids d'alpha-oléfines en $C_4$-$C_8$.

**9.** Film de polymère de propylène multicouche orienté biaxialement selon la revendication 7, les couches extérieures A contenant une composition de polymère de propylène comprenant :

(I) 25-45% en poids d'un copolymère de propylène et d'éthylène contenant 2-5% en poids d'unités d'éthylène, et (II) 55-75% en poids d'un terpolymère de propylène, d'éthylène et d'une ou plusieurs alpha-oléfines en $C_4$-$C_{10}$ contenant 2-5% en poids d'unités d'éthylène et 6-12% en poids d'unités alpha-oléfiniques.

**10.** Film de polymère de propylène multicouche orienté biaxialement selon l'une quelconque des revendications 1 à 9, présentant un taux de transmission de la vapeur d'eau, mesuré selon la norme ASTM F 1249, supérieur à 5,5 g/m$^2$-jour.

**11.** Film de polymère de propylène multicouche orienté biaxialement selon l'une quelconque des revendications 1 à 9, présentant un taux de transmission de l'oxygène, mesuré selon la norme ASTM D3985, supérieur à 1900 cc/m$^2$-jour.

**12.** Film de polymère de propylène multicouche orienté biaxialement thermorétractable selon l'une quelconque des revendications 1 à 9, présentant un retrait libre dans au moins une direction supérieur à 10% à 120°C et supérieur à 20% à 135°C.

**13.** Film de polymère de propylène multicouche orienté biaxialement thermorétractable selon l'une quelconque des revendications 1 à 9, présentant un retrait libre supérieur à 10% à 120°C et supérieur à 20% à 135°C dans une direction et un retrait libre inférieur à 5% à 120°C et inférieur à 8% à 135°C dans l'autre direction.

**14.** Film de polymère de propylène multicouche orienté biaxialement thermorétractable selon l'une quelconque des revendications 1 à 9, présentant une valeur de voile avant le retrait inférieure à 2,5% et une valeur de voile après le retrait inférieure à 3,0%.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0170500 A
- WO 02057342 A
- US 2004151561 A
- EP 1219506 A
- EP 45977 A
- EP 361494 A
- EP 728769 A
- EP 1272533 A
- WO 0063261 A
- US 4399054 A
- US 4469648 A
- EP 395083 A
- WO 9844009 A
- EP 782587 A
- WO 0148034 A
- EP 0213552 W
- DE 10324541
- WO 0031090 A
- WO 9109882 A
- WO 9906414 A